# EUROPÄISCHE PATENTSCHRIFT

(11) **EP 1 053 416 B1**
(45) Veröffentlichungstag und Bekanntmachung des Hinweises auf die Patenterteilung: **27.08.2003**
(21) Anmeldenummer: 99961046.2
(22) Anmeldetag: 02.12.1999
(51) Int. Cl.: F16H 57/02, F16D 55/36, F16D 67/04

(54) **GETRIEBEBAUEINHEIT**
TRANSMISSION UNIT
COMPOSANT DE TRANSMISSION

(30) Priorität: 03.12.1998 DE 19855761
(43) Veröffentlichungstag der Anmeldung: 22.11.2000
(73) Patentinhaber: Voith Turbo GmbH & Co. KG, 89522 Heidenheim (DE)
(72) Erfinder: KÖRNER, Tillmann, D-89551 Zang (DE); SCHIEDER, Achim, Paul, D-92703 Krummennaab (DE)
(74) Vertreter: Dr. Weitzel & Partner
(86) Internationale Anmeldenummer: EP9909392
(87) Internationale Veröffentlichungsnummer: WO00032965

(56) Entgegenhaltungen:
- EP-A- 0 757 189
- DE-U- 9 404 383
- GB-A- 1 411 361
- US-A- 5 653 321
- BUCKSCH M.: "ZF-5-Gang-Automatgetriebe für PKW (5HP 18)" VDI BERICHTE NR. 878,1991, Seiten 189-200, XP000879075 in der Anmeldung erwähnt
- NITESCU G.: "Viergangplanetengetriebe für Personenkraftwagen mit dem hydrodynamischen Drehmomentwandler in Leistungsverzweigung" AUTOMOBIL INDUSTRIE, Nr. 1, 1985, Seiten 597-602, XP000874737 in der Anmeldung erwähnt
- KLEMENT W: "DIE ENTWICKLUNG DER VOITH-DIWA-GETRIEBE" VERKEHR UND TECHNIK,DE,ERIC SCHMIDT VERLAG, BIELEFELD, Bd. 40, Nr. 7, 1987, Seiten 301-303, XP000874413 ISSN: 0340-4536 in der Anmeldung erwähnt

## Beschreibung

Die Erfindung betrifft eine Getriebebaueinheit im einzelnen mit den Merkmalen aus dem Oberbegriff des Anspruchs 1.

Getriebebaueinheiten sind in einer Vielzahl von Ausführungen bekannt. Diese können als
a) mechanische Getriebebaueinheit
b) hydrodynamisch-mechanische Verbundgetriebebaueinheit
ausgeführt sein. Hydrodynamisch-mechanische Verbundgetriebebaueinheiten sind beispielsweise aus den folgenden Druckschriften bekannt:
- Bucksch M.: ZF-5-Gang-Automatgetriebe für Pkw, VDE-Bericht 878 (1991)
- Mitesko G.: Viergangplanetengetriebe für Personenkraftwagen mit dem hydrodynamischen Drehmomentenwandler in der Leistungsverzweigung, Automobilindustrie (1995) 5, S. 597 - 691
- Clement, W.: Die Entwicklung der DIWA-Getriebe; Verkehr und Technik (1987) 7, S. 301 - 303

Die Getriebebaueinheiten, welche entweder nur rein mechanische Übertragungskomponenten besitzen oder aber aus einer Kombination eines hydrodynamischen Wandlers oder einer hydrodynamischen Kupplung mit einem nachgeschalteten mechanischen Getriebesatz bestehen, weisen in der Regel ein Gehäuse auf, welches hinsichtlich seiner Innenkontur der Gestaltung und Anbindung an das Gehäuse der einzelnen Getriebeelemente angepasst ist, und besitzen des weiteren Inneneinsätze, die den Innendurchmesser unerwünscht reduzieren. Beispielsweise nutzt ein am Markt erhältliches Getriebe eine Auffädelung an sechs Stangen in gleichbleibenden Abständen um den Umfang der Innenkontur verteilt mit dem Ziel einer sehr Einfachen Montage der Bauelemente bzw. Getriebeelemente. Die einzelnen Stangen sichern die Getriebeelemente gegen Verdrehung in Umfangsrichtung. Die Anordnung der sechs Stäbe in Umfangsrichtung des Innenraumes der Getriebebaueinheit betrachtet mit gleichbleibendem Abstand zwischen zwei einander benachbarten Stangen sowie die Anzahl dieser Stangen reduzieren jedoch den Innendurchmesser des Getriebes erheblich, da im wesentlichen die in Einbaulage oberen Stangen die Bauhöhe und damit den möglich nutzbare Planetendurchmesser reduzieren. Der Getriebeinnenraum kann somit bezogen auf die vorhandenen Außenabmessungen des Getriebes nicht optimal für die Getriebeelemente genutzt werden.

Der Erfindung liegt daher die Aufgabe zugrunde, Getriebebaueinheiten, insbesondere Getriebegehäuse, derart zu schaffen, daß bei gleichbleibenden äußeren vorgegebenen Einbaumaßen für die Getriebeeinheit die mit dem Getriebe übertragbaren Drehmomente vergrößert werden können, indem möglichst große Durchmesser für die Getriebeelemente erzielt werden. Im einzelnen ist auf eine Reduzierung des konstruktiven und fertigungstechnischen Aufwandes sowie eine Minimierung der erforderlichen Bauteilanzahl abzustellen.

Die erfindungsgemäße Lösung der Aufgabe ist durch die Merkmale des Anspruchs 1 charakterisiert. Vorteilhafte Ausgestaltungen sind in den Unteransprüchen beschrieben.
Eine derartig gattungsgemäße Getriebebaueinheit ist ferner auch aus der Druckschrift US-A-5 653 321 vorbekannt. Auch bei dieser erfolgt die Aufhängung und Führung von einzelnen Getriebeelementen an stabförmigen bzw. stangenförmigen Führungselementen, die im wesentlichen in gleichbleibenden Abständen den Umfang der für die Getriebeelemente benötigten Kontur angeordnet sind, wobei diese in Ausnehmungen , die mit dem Innenraum verbunden sind, angeordnet sind. Die Anzahl der Führungselemente ist nicht begrenzt. Jedoch erfordert die Anordnung und den Umfang des Innenraumes eine entsprechende Berücksichtigung bei der Auslegung und Dimensionierung des Getriebes, insbesondere des Getriebegehäuses, wobei der in Höhenrichtung zur Verfügung stehende Bauraum für die Getriebeelemente durch den erforderlichen Bauraum für die in Höhenrichtung angeordneten Führungselemente ebenfalls begrenzt wird.

Die Erfinder haben erkannt, daß mit einer Durchmessersteigerung bei den kraft- bzw. leistungsübertragenden Elementen bei gleicher Baulänge ein größeres übertragbares Drehmoment erzielt werden kann. Dieses verhält sich proportional zur Wurzel des Durchmessers, während eine Proportionalität zur Baulänge b der Getriebebaueinheit, d.h. zur Breite in axialer Richtung direkt gegeben wäre. Die Getriebebaueinheit, welche ein Getriebegehäuse umfaßt, das einen im wesentlichen zylindrischen Innenraum aufweist, weist Mittel zur ortsfesten Anbindung von Getriebeelementen gegenüber dem Gehäuse auf. Diese Mittel sind erfindungsgemäß dem Innenraum zugeordnet und in einem Bereich außerhalb dieses angeordnet, wobei die Zuordnung zum Innenraum derart erfolgt, daß die Mittel außerhalb eines Bereiches, welcher in Einbaulage des Getriebes betrachtet der größten Abmessung in Höhenrichtung der Getriebebaueinheit entspricht, vorgesehen werden. Die Anzahl der Mittel beträgt wenigstens zwei. Vorzugsweise erfolgt die Zuordnung der Mittel im Querschnitt der Getriebebaueinheit betrachtet in den Eckenbereichen des Gehäuses, welche sich durch Zuordnung eines theoretischen Rechteckes bzw. Quadrates zum Innenraum mit einer Abmessung in Höhenrichtung des Getriebes von gleich oder größer des Durchmessers der Innenkontur der Getriebebaueinheit beschreiben läßt.

Unter Getriebeelementen werden dabei Bauteile und Einrichtungen verstanden, welche nicht rotieren sondern eine gegenüber dem Gehäuse in der Regel ortsfeste Lage einnehmen.

Mit der erfindungsgemäßen Lösung läßt sich der Innendurchmesser bzw. die Innenkontur des Getriebegehäuses bei gleichbleibenden Einbaumaßen für die Getriebebaueinheit merklich größer gestalten. Die Ausgestaltung der Mittel insbesondere der Eingriffstellen für die Getriebeelemente am Gehäuse können hinsichtlich ihrer Form und Gestaltung sehr vielseitig ausgeführt sein. Die Mittel umfassen dazu in der Regel Ausnehmungen im Getriebegehäuse, welche mit dem Innenraum verbunden sind. Diese Ausnehmungen können verschiedenartig entsprechend der dazu komplementären Gestaltung der Getriebeelemente ausgeführt werden. Eine Möglichkeit besteht in der Ausgestaltung der Eingriffstellen am Getriebegehäuse in Form von Eingriffstaschen, in welche die zur Anbindung der Getriebeelemente in radialer Richtung genutzten Bauteile eingesetzt werden. Die Anbindung der Getriebeelemente selbst erfolgt entweder
a) formschlüssig oder
b) kraft- und formschlüssig.

Im erstgenannten Fall werden die Aufhängungselemente für die Getriebeelemente derart ausgeführt, daß diese zu den Eingriffstaschen am Getriebegehäuse komplementäre Vorsprünge aufweisen, welche in die Eingriffstaschen in axialer Richtung einführbar und in axialer Richtung in den Eingriffstaschen verschiebbar sind, wobei über den Formschluß in Umfangsrichtung eine Verdrehsicherung gewährleistet wird.

Im letztgenannten Fall sind zusätzliche Elemente vorgesehen, mittels welchen die Getriebeelemente wenigstens formschlüssig gekoppelt sind, beispielsweise in Form von Steckstiften, welche in Einbaulage in den Eingriffstaschen angeordnet sind und in diesen in axialer Richtung gesichert bzw. befestigt sein können.

In beiden genannten Fällen ist eine Sicherung der Getriebeelemente in axialer Richtung erforderlich. Zur Sicherung können beispielsweise die folgenden Sicherungselemente verwendet werden:
a) Sicherungsringe
b) Einschiebebleche
c) Hülsen
d) Zwischenwände.

Die Ausführung der Sicherungselemente hängt dabei im wesentlichen von der Gestaltung der Eingriffstaschen und der dazu komplementären Elemente zur Aufhängung der Getriebeelemente im Getriebegehäuse ab. Die Sicherung in axialer Richtung erfolgt entweder gegenüber dem Gehäuse oder dem Element, welches das Getriebeelement trägt.

Vorzugsweise wird die Gehäuseaußenkontur rechteckig ausgeführt. In diesem Fall erfolgt die Anbindung der Getriebeelemente im Querschnitt des Getriebegehäuses betrachtet immer in den Eckbereichen der Gehäusewand, welche sich durch den Innenraum und die rechteckförmige bzw. quadratische Außenkontur bestimmen lassen. Neben einer einfachen Montage durch Einfädeln der einzelnen Getriebeelemente in die Eingriffstaschen bzw. auf die in den Eingriffstaschen angeordneten stabförmigen Elemente ermöglicht das Prinzip der Eckenaufhängung einen größeren zur Leistungsübertragung verfügbaren Innendurchmesser des Getriebegehäuses für die Getriebebaueinheit, was aufgrund des Zusammenhanges zwischen den Durchmessern der einzelnen Getriebeelemente und dem übertragbaren theoretischen Drehmoment zu einer Verkürzung der Gesamtgetriebebaueinheit in axialer Richtung führen kann, da auf zusätzliche Übertragungselemente verzichtet werden kann. Desweiteren kann mit einer Aufhängung in den vier Eckenbereichen eine einfache Verdrehsicherung gegenüber Verdrehen in Umfangsrichtung erzielt werden. Das Gehäuse selbst ist einfach herstellbar, vorzugsweise wird dieses mit einem konstanten Innendurchmesser über die gesamte axiale Baulänge ausgeführt. Denkbar sind jedoch auch Bereiche mit unterschiedlichen Innendurchmessern. Die Montage der Getriebebaueinheit selbst gestaltet sich sehr einfach. Desweiteren ist eine Kompaktbauweise durch die Einsätze möglich. Ein weiterer wesentlicher Vorteil der Aufhängung am Gehäuse entsprechend der erfindungsgemäßen Ausführung besteht darin, daß Baugruppen ohne Probleme hinsichtlich ihrer Anordnung in axialer Richtung vertauscht werden können und somit hinsichtlich ihres Aufbaus anders gestaltete Getriebetypen auf einfache Art und Weise erzeugt werden können, ohne daß Veränderungen des Gehäuses, insbesondere des Innenraumes erforderlich werden.

Die erfindungsgemäße Lösung wird nachfolgend anhand einer Figur erläutert.

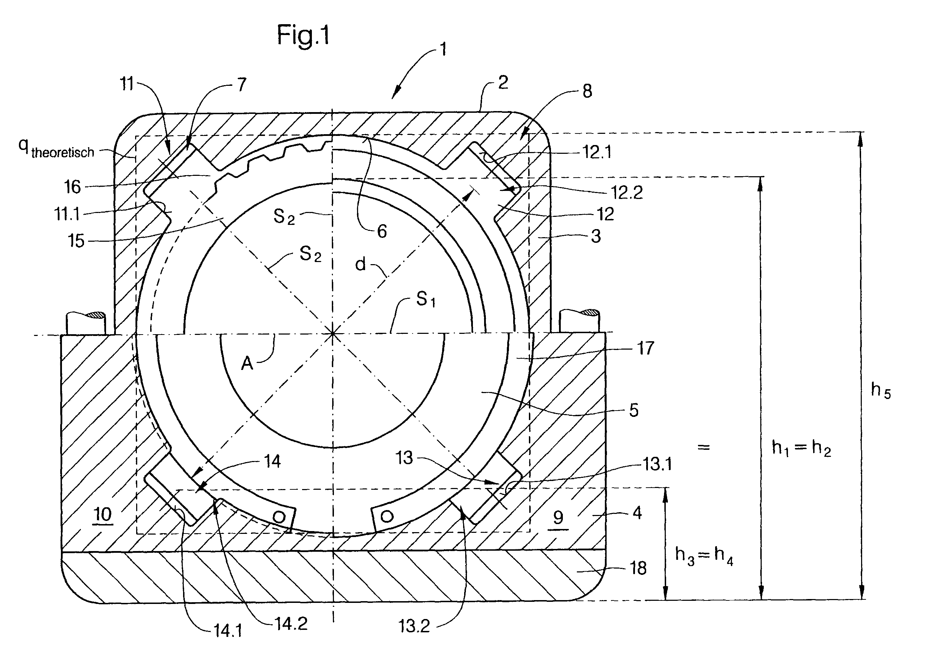

Die Figur verdeutlicht in schematisch vereinfachter Darstellung einen Querschnitt aus einer erfindungsgemäß gestalteten Baueinheit 1. Diese weist ein Getriebegehäuse 2 auf, welches im dargestellten Fall, beispielsweise in zwei Teilbereiche 3 und 4 unterteilt ist. Der erste Teilbereich 3 bildet dabei den in Einbaulage oberen Gehäuseteil, der zweite Teilbereich 4 den in Einbaulage unterhalb der Getriebesymmetrieachse A angeordneten Gehäuseteil. Das Getriebegehäuse 2 weist einen im wesentlichen zylindrischen Innenraum 5 auf. Dieser kann durch den Durchmesser d beschrieben werden. Vorzugsweise weist die gesamte Getriebebaueinheit 1 bzw. das Getriebegehäuse 2 über ihre Erstreckung in axialer Richtung einen konstanten Innendurchmesser d auf. Dem Innendurchmesser d sind Mittel zur Aufnahme und Anbindung der Getriebeelemente in radialer Richtung zugeordnet. Diese Mittel sind dem durch den Durchmesser d beschriebenen Innenumfang 6 des zylindrischen Innenraumes 5 derart zugeordnet, daß diese in Einbaulage der Getriebebaueinheit 1 im dargestellten Fall auf einer Höhe h₁ und h₄ angeordnet sind, welche bezüglich der Abmessungen kleiner der durch die maximale Erstreckung des Innenraumes 5 in Einbaulage betrachtet in Höhenrichtung beschriebenen Abmessung h₅ ist. Vorzugsweise sind jedoch - wie im dargestellten Fall - die Mittel in den Eckenbereichen 7, 8, 9 bzw. 10 angeordnet, wobei die Eckenbereiche sich durch eine Zuordnung eines theoretisch gedachten Viereckes, vorzugsweise Quadrates zum Innenraum 5 beschreiben lassen. Die Eckenbereiche werden dabei in Einbaulage durch Zuordnung des Quadrates q_{theoretisch} beschrieben, indem der von der Innenkontur 6 umschriebene Durchmesser d in dem Quadrat angeordnet ist und beide, das theoretisch zur Betrachung herangezogene Quadrat q_{theoretisch} sowie der Innenraum 5 des Gehäuses 2 die gleichen Symmetrieachsen s1 bzw. s2 aufweisen. Die Mittel, welche in den Eckenbereichen 7 bis 10 angeordnet sind, sind mit 11, 12, 13 und 14 bezeichnet. Die Mittel umfassen dabei wenigstens jeweils eine Ausnehmung 11.1, 12.1, 13.1 bzw. 14.1 im Getriebegehäuse 2, welche die sogenannten Eingriffstaschen bilden und eine dazu komplementäre Gestaltung der Getriebeelemente. Im dargestellten Fall ist als Getriebeelement 15 eine Außenlamelle verdeutlicht. Diese weist zur Anbindung am Gehäuse 2 einen sogenannten Lamellenträger 16 auf, welcher zu den Eingriffstaschen 11.1 - 14.1 komplementäre Vorsprünge aufweist, die hier jeweils mit 11.2 - 14.2 bezeichnet sind. Die Vorsprünge sind derart ausgeführt, daß diese eine zumindest formschlüssige Verbindung mit dem Gehäuse 2 bilden. Vorzugsweise wirken die Mittel jedoch auch kraftschlüssig. Im dargestellten Fall würde dies bedeuten, daß der Lamellenträger 16, insbesondere dessen Vorsprünge, mit einer entsprechenden Passung in die Eingriffstaschen 11.1 - 14.1 eingeführt wird. Die Sicherung in axialer Richtung erfolgt im dargestellten Fall mittels eines Sicherungsringes 17, welcher entsprechend der Innenkontur 6 des Getriebegehäuses 2 ausgelegt ist, und hier zur Verdeutlichung nur teilweise dargestellt ist.

Im dargestellten Fall erfolgt die Anbindung in allen vier möglichen Eckenbereichen 7 bis 10. Die Mittel sind dementsprechend mit gleichbleibendem Abstand in Umfangsrichtung des Innenraumes 5 betrachtet angeordnet. Es besteht jedoch auch die Möglichkeit, eine im wesentlichen symmetrische Anordnung zu finden, welche von der Anordnung in den Eckenbereichen abweicht. Wesentlich ist jedoch, daß insbesondere in Einbaulage die Bauhöhe selbst kaum verändert und ein maximal nutzbarer Innendurchmesser für die Getriebeelemente, insbesondere die rotierenden Bauteile, bezogen auf die Einbauhöhe erzielt wird. So ist es denkbar, daß nicht wie im dargestellten Fall den Mitteln die gleiche Symmetrieachse zuordenbar sind - S₁ und S₂ - sondern daß lediglich nur bezüglich einer Symmetrieachse Symmetrie besteht. Beispielsweise ist es denkbar, die Mittel 11 und 14 mit einem entsprechend engeren Abstand zu versehen und in Analogie ebenfalls die Mittel 12 und 13. Eine weitere, jedoch nicht so vorteilhafte Möglichkeit besteht darin, generell unterschiedliche Abstände zwischen den einzelnen Mitteln vorzusehen. Lediglich die in Einbaulage oberhalb der Getriebesymmetriechse angeordneten Mittel sind im Bereich der theoretisch maximalen Höhe h₅, welche durch die in Einbaulage maximale Erstreckung der Innenkontur in radialer Richtung beschrieben wird, anzuordnen.

Die dargestellte Getriebebaueinheit weist beispielhaft desweiteren einen unteren Gehäuseteil 4 auf, welcher gegenüber dem Gehäuseteil 3 vergrößert ausgeführt ist, so daß in diesem auch Steuereinheiten und beispielsweise die Ölwanne 18 integriert werden können.

## Patentansprüche

1. Getriebebaueinheit
1.1 mit einem Getriebegehäuse (2);
1.2 das Getriebegehäuse (2) weist einen im wesentlichen zylindrischen Innenraum (5) zur Aufnahme einzelner Getriebeelemente (15) auf;
1.3 es sind wenigstens zwei Mittel zur Anbindung (11, 12, 13, 14, 16) eines einzelnen Getriebeelementes (15) in radialer Richtung am Getriebegehäuse (2) vorgesehen;
1.4 die Mittel (11, 12, 13, 14) sind dem Innenraum (5) derart zugeordnet, dass diese in Einbaulage der Getriebebaueinheit (1) auf einer Höhe (h₁, h ₄) angeordnet sind, welche bezüglich der Abmessungen kleiner der durch die maximale Erstreckung des Innenraumes (5) in Einbaulage betrachtet in Höhenrichtung beschriebenen Abmessung (h₅) ist;
**gekennzeichnet durch** die folgenden Merkmale:
1.5 bei gleichbleibenden äußeren vorgegebenen Einbaumaßen erfolgt die Zuordnung der Mittel (11,12,13,14,16) in Eckenbereichen (7,8,9,10) des Getriebegehäuses (2), welche **durch** die Schnittmenge von Innenraum (5) und einem theoretisch bildbaren Quadrat q_{theoretisch} mit einer Seitenabmessung größer/gleich dem Durchmesser d des Innenraumes (5) beschreibbar ist, wobei das theoretisch bildbare Quadrat q_{theoretisch} und der Innenraum (5) identische Symmetrieachsen aufweisen.

2. Getriebebaueinheit nach Anspruch 1, **dadurch gekennzeichnet, daß** der Innenraum (5) über die gesamte axiale Erstreckung in Einbaulage einen im wesentlichen konstanten Durchmesser d aufweist.

3. Getriebebaueinheit nach Anspruch 1 oder 2, **dadurch gekennzeichnet, daß** die Mittel (11, 12, 13, 14) dem Innenraum (5) in Einbaulage in Höhenrichtung betrachtet innerhalb eines Bereiches angeordnet sind, der durch die in Einbaulage in Höhenrichtung größten Abmessung (h₅) des Innenraumes (5) beschrieben wird.

4. Getriebebaueinheit nach einem der Ansprüche 1 bis 3, **dadurch gekennzeichnet, daß** die Mittel (11, 12, 13, 14) in allen vier Eckenbereichen (7, 8, 9, 10) des Gehäuses (2) mit im wesentlichen in Umfangsrichtung des Innenraumes (5) betrachtet konstantem Abstand zueinander angeordnet sind.

5. Getriebebaueinheit nach einem der Ansprüche 1 bis 4, **dadurch gekennzeichnet, daß** die Mittel (11, 12, 13, 14) mit dem Innenraum (5) verbundene Ausnehmungen (11.1, 12.1, 13.1, 14.1) im Getriebegehäuse (2) umfassen, welche zur Führung dazu komplementärer Vorsprünge (11.2, 12.2, 13.2, 14.2) an den Getriebeelementen (15) ausgebildet sind.

6. Getriebebaueinheit nach einem der Ansprüche 1 bis 5, **dadurch gekennzeichnet, daß** die Mittel (11, 12, 13, 14) mit dem Innenraum (5) verbundene Ausnehmungen (11.1, 12.1, 13.1, 14.1) im Getriebegehäuse (2) umfassen, in welchen sich in axialer Richtung der Getriebebaueinheit in Einbaulage betrachtet erstreckende stabförmige Elemente angeordnet sind, auf welche die Getriebeelemente (15) aufsteckbar oder in welche die Getriebeelemente (15) einsteckbar sind.

7. Getriebebaueinheit nach einem der Ansprüche 1 bis 6, **dadurch gekennzeichnet, daß** den einzelnen Getriebeelementen (15) Mittel zur Begrenzung und/oder Vermeidung axialer Bewegbarkeit (17) zugeordnet sind.

8. Getriebebaueinheit nach Anspruch 7, **dadurch gekennzeichnet, daß** die Mittel zur Begrenzung und/oder Vermeidung axialer Bewegbarkeit (17) sich über den gesamten Innenraum (5) im Axialschnitt betrachtet erstrecken.

9. Getriebebaueinheit nach Anspruch 8, **dadurch gekennzeichnet, daß** die Mittel zur Begrenzung und/oder Vermeidung axialer Bewegbarkeit in den Ausnehmungen angeordnet sind.

## Claims

1. Transmission unit
1.1 comprising a transmission housing (2);
1.2 the transmission housing (2) comprises a substantially cylindrical inner space (5) for receiving individual transmission elements (15);
1.3 at least two means are provided for connecting (11, 12, 13, 14, 16) an individual transmission element (15) to the transmission housing (2) in the radial direction;
1.4 the means (11, 12, 13, 14) are associated with the inner space (5) in such a way that they are arranged in the installation position of the transmission unit (1) at a height (h₁, h₄), which is smaller with respect to dimensions than the dimension (h₅) described in the height direction by the maximum extension of the inner space (5), viewed in the installation position;
1.5 in the case of outer predetermined installation measurements remaining the same, the means (11, 12, 13, 14, 16) are allocated in corner regions (7, 8, 9, 10) of the transmission housing (2), the allocation being describable by the intersection of the inner space (5) and a theoretically formable square q_{theoretical} with a side dimension which is greater than or equal to the diameter d of the inner space (5), wherein the theoretically formable square q_{theoretical} and the inner space (5) have identical axes of symmetry.

2. Transmission unit according to claim 1, **characterised in that** the inner space (5) has a substantially constant diameter d over the entire axial extension in the installation position.

3. Transmission unit according to claim 1 or 2, **characterised in that** the means (11, 12, 13, 14) are allocated to the inner space (5) in the installation position, viewed in the height direction, within a region which is described by the greatest dimension (h₅) of the inner space (5) in the height direction in the installation position.

4. Transmission unit according to any one of claims 1 to 3, **characterised in that** the allocation of the means (11, 12, 13, 14, 16) takes places in corner regions (7, 8, 9, 10) of the housing (2), the allocation being describable by the intersection of the inner space (5) and a theoretically formable square q_{theoretical} with a side measurement which is greater than or equal to the diameter d of the inner space (5), wherein the theoretically formable square q_{theoretical} and the inner space (5) have identical axes of symmetry.

5. Transmission unit according to any one of claims 1 to 4, **characterised in that** the means (11, 12, 13, 14) comprise connected recesses (11.1, 12.1, 13.1, 14.1) connected in the inner space (5) in the transmission housing (2) which are formed to guide projections (11.2, 12.2, 13.2, 14.2) which are complementary thereto to the transmission elements (15).

6. Transmission unit according to any one of claims 1 to 5, **characterised in that** the means (11, 12, 13, 14) comprise recesses (11.1, 12.1, 13.1, 14.1) connected in the inner space (5) in the transmission housing (2) in which bar-shaped elements extending in the axial direction of the transmission unit, viewed in the installation position, are arranged, to which elements the transmission elements (15) can be attached or into which the transmission elements (15) can be inserted.

7. Transmission unit according to any one of claims 1 to 6, **characterised in that** means for limiting and/or avoiding axial mobility (17) are allocated to the individual transmission elements (15).

8. Transmission unit according to claim 7, **characterised in that** the means for limiting and/or avoiding axial mobility (17) extend over the entire inner space (5), viewed in axial section.

9. Transmission unit according to claim 8, **characterised in that** the means for limiting and/or avoiding axial mobility are arranged in the recesses.

## Revendications

1. Unité de transmission
1.1 avec un carter de transmission (2) ;
1.2 le carter de transmission (2) présente un espace intérieur (5) sensiblement cylindrique de réception d'éléments individuels de transmission (15) ; **caractérisé par** les éléments caractéristiques suivant
1.3 il est prévu au moins deux moyens de liaison (11, 12, 13, 14, 16) d'un élément individuel de transmission (15) dans le sens radial sur le carter de transmission (2) ;
1.4 les moyens (11, 12, 13, 14) sont affectés à l'espace intérieur (5) de façon que ceux-ci soient, en position d'implantation de l'unité de transmission (1), placés à une hauteur (h₁, h₄) qui, en ce qui concerne les dimensions, est inférieure à la mesure (h5) décrite par l'étendue maximale de l'espace intérieur (5) dans le sens de la hauteur vu en position de montage ;
1.5 pour des mesures de montage extérieures prédéfinies inchangées, les moyens (11, 12, 13, 14, 16) sont affectés dans des zones d'angle (7, 8, 9, 10) du carter de transmission (2), lesquelles peuvent être décrites par l'intersection de l'espace intérieur (5) et d'un carré théoriquement traçable (Q_{theorisch}) avec une longueur de côté supérieure ou égale ou diamètre d de l'espace intérieur (5), le carré théoriquement traçable (Q_{theorisch}) et l'espace intérieur (5) présentant des axes de symétrie identiques.

2. Unité de transmission selon la revendication 1, **caractérisée en ce que** l'espace intérieur (5) présente sur toute l'étendue axiale en position de montage un diamètre d, sensiblement constant.

3. Unité de transmission selon la revendication 1 ou 2, **caractérisée en ce que** les moyens (11, 12, 13, 14) sont affectés à l'espace intérieur (5) vu dans le sens de la hauteur en position de montage, à l'intérieur d'une zone qui est décrite dans le sens de la hauteur en position de montage par la plus grande dimension (hₛ) de l'espace intérieur (5).

4. Unité de transmission selon l'une des revendications 1 à 3, **caractérisée en ce que** les moyens (11, 12, 13, 14, 16) sont affectés dans des zones d'angle (7, 8, 9,10) du carter (2) qui peuvent être décrites par l'intersection de l'espace intérieur (5) et d'un carré théoriquement traçable (Q_{theorisch}) avec une longueur de côté supérieure ou égale au diamètre d de l'espace intérieur (5), où le ....

5. Unité de transmission selon l'une des revendications 1 4, **caractérisée en ce que** les moyens (11, 12, 13, 14) comprennent des évidements (11.1, 12.1, 13.1, 14.1) reliés à l'espace intérieur (5) dans le carter de transmission (2), qui sont conçus pour le guidage de saillies complémentaires (11.2, 12.2, 13.2, 14.2) formées sur les éléments de transmission (15).

6. Unité de transmission selon l'une des revendications 1 à 5, **caractérisée en ce que** les moyens (11, 12, 13, 14) comprennent des évidements (11.1, 12.1, 13.1, 14.1) reliés à l'espace intérieur (5) dans le carter de transmission (2), dans lesquels sont disposés des éléments en forme de barres s'étendant dans le sens axial de l'unité de transmission vu en position de montage, sur lesquels les éléments de transmission (15) peuvent s'emboîter ou dans lesquels ils peuvent s'enficher.

7. Unité de transmission selon l'une des revendications 1 à 6, **caractérisée en ce que** des moyens de limitation et/ou de suppression de la mobilité axiale (17) sont affectés aux éléments individuels de transmission (15).

8. Unité de transmission selon la revendication 7, **caractérisée en ce que** les moyens de limitation et/ou de suppression de la mobilité axiale (17) s'étendent sur l'ensemble de l'espace intérieur (5) vu en coupe axiale.

9. Unité de transmission selon la revendication 8, **caractérisée en ce que** les moyens de limitation et/ou de suppression de la mobilité axiale sont agencés dans les évidements.
